# EUROPEAN PATENT SPECIFICATION

(11) **EP 3 062 481 B1**
(45) Date of publication and mention of the grant of the patent: **10.10.2018**
(21) Application number: 14868045.7
(22) Date of filing: 06.08.2014
(51) Int. Cl.: H04L 29/08, H04L 29/06

(54) **METHOD AND RELATED DEVICE FOR PROVIDING APPLICATION SERVICE**
VERFAHREN UND ZUGEHÖRIGE VORRICHTUNG ZUR BEREITSTELLUNG EINES ANWENDUNGSDIENSTES
PROCÉDÉ ET DISPOSITIF ASSOCIÉ DESTINÉS À LA FOURNITURE DE SERVICE D'APPLICATION

(30) Priority: 04.12.2013 CN 201310649046
(43) Date of publication of application: 31.08.2016
(73) Proprietor: Huawei Technologies Co., Ltd., Longgang District Shenzhen, Guangdong 518129 (CN)
(72) Inventor: LI, Zijun, Shenzhen Guangdong 518129 (CN); MIAO, Chuanjie, Shenzhen Guangdong 518129 (CN)
(74) Representative: Gill Jennings & Every LLP
(86) International application number: PCT/CN2014/083786
(87) International publication number: WO 2015/081716

(56) References cited:
- CN-A- 1 476 712
- CN-A- 1 476 712
- CN-A- 101 174 219
- CN-A- 102 572 806
- CN-A- 103 685 491
- US-A1- 2002 131 404
- US-A1- 2013 268 390

## Description

### TECHNICAL FIELD

The present invention relates to the field of communications technologies and the field of computer technologies, and in particular, to an application service providing method and system, and a related device.

### BACKGROUND

The progress of technologies results in advent of an increasing number of smart devices in abundant forms, such as a portable device including a smartphone, a tablet computer, a smart watch, a wristband, or the like, and a device that is disposed in an environment, such as an intelligentized refrigerator, a sound box, or a television.

Various application services may be run on a smart device, so that diversified digital content is provided to users. In addition, input and output capabilities of each type of smart device are different, and manners and capabilities for processing content are different, so presentation forms for providing an application service are also different.

Currently, when an application service is provided on different types of smart devices, a user needs to install a corresponding application program on each smart device; and due to different types of smart devices, installed application programs are also different.

A music service is used as an example. The music service has a unified background, and different application programs are installed on different types of smart devices to call a common background service. In this case, the user can enjoy the same music service on the different types of smart devices. For example, music collected by a user on a smart device may be presented and conveniently appreciated on another smart device.

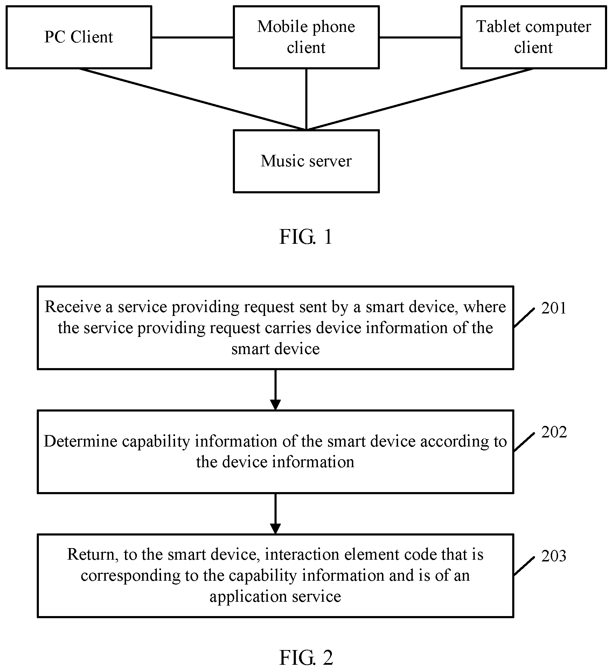

For example, as shown in FIG. 1, a PC client (in a web page form) installed on a personal computer, a mobile phone client (in an application (APP, application) form) installed on a smartphone, and a tablet computer client (in an APP form) installed on a tablet computer all may interact with a music server providing a music service. The music server provides music service content to all types of smart devices and displays the music service content to a user on the smart devices.

However, in the foregoing solution, when a user wants to share a same application service on different types of smart devices, the user needs to manually download and install corresponding application programs on all types of smart devices separately, and can share a personalized application service only after registration and login, so that complexity for a user to use a same application program on all types of smart devices is increased, and using efficiency of a user is reduced, thereby resulting in poorer user experience.

In addition, for different types of smart devices, because operating systems running on the smart devices are different, an application service developer also needs to develop application program versions adaptive to various operating systems, for example, a version adaptive to an Apple operating system, a version adaptive to an Android operating system, a version adaptive to a windows phone system, and a web page version. Therefore, difficulty in developing an application program, corresponding to a same application service, for all types of smart devices by a developer is increased, development costs are relatively high, and developing efficiency is relatively low.

US 2013/0268390 relates to providing a customized application to a user terminal. CN 1476712 relates to web server and method for dynamic content.

### SUMMARY

Embodiments of the present invention provide an application service providing method and system, which aim to solve problems, which exist in the prior art, of higher complexity for a user to use a same application service on all types of smart devices, and higher difficulty for a developer in developing an application program, corresponding to a same application service, for all types of smart devices.

In particular, the present disclosure provides method according to claim 1, and a management service end according to claim 5. Further technical features are defined in corresponding dependent claims.

Beneficial effects of the present invention include:
According to the foregoing solutions provided in the embodiments of the present invention, when an application service needs to be used, a smart device sends a service providing request to a service end, and the service providing request carries device information of the smart device, so that the service end determines capability information of the smart device according to the device information,
and returns, to the smart device, interaction element code that is corresponding to the capability information and is of the application service, and the smart device provides the application service to a user by running the interaction element code.
Because the smart device only needs to send the device information of the smart device to a service end, and then, the service end may return the interaction element code required during application service providing, so that an application service is provided to the user by running the interaction element code. Different from the prior art, a user does not need to manually download and install corresponding application programs for different types of smart devices, and can use a same application service on all types of smart devices only by sending device information of the smart devices to the service end, so that implementation complexity is reduced; and in addition, a developer does not need to develop application programs, corresponding to a same application service, for all types of smart devices either, and only needs to develop corresponding interaction element code for capability information of the smart devices, so that difficulty in developing an application program corresponding to a same application service is reduced, development costs are reduced, and development efficiency is improved.

Other features and advantages of this application will be elaborated in the subsequent specification, and in addition, some of the features and the advantages become obvious in the specification, or are learned by implementing this application. Aims and other advantages of this application may be implemented and obtained by using written specification and claims, and structures particularly specified in the drawings.

### BRIEF DESCRIPTION OF DRAWINGS

The drawings are used for providing further understanding of the present invention, and constitute a part of the specification. The drawings and the embodiments of the present invention are jointly used for describing the present invention, and no limitation is imposed on the present invention. In the drawings:
FIG. 1 is a schematic diagram of a solution of sharing a same application service on all types of smart devices in the prior art;
FIG. 2 is a flowchart of an application service providing method applied to a service end according to an embodiment of the present invention;
FIG. 3 is a flowchart of an application service providing method applied to a smart device according to an embodiment of the present invention;
FIG. 4 is a flowchart of an application service providing method according to Embodiment 1 of the present invention;
FIG. 5 is a flowchart of requesting a specified terminal to execute returning interaction element code according to Embodiment 1 of the present invention;
FIG. 6 is a schematic structural diagram of an application service providing system according to Embodiment 2 of the present invention;
FIG. 7 is a schematic structural diagram of a management service end according to Embodiment 3 of the present invention;
FIG. 8 is a schematic structural diagram of an application service end according to Embodiment 4 of the present invention;
FIG. 9 is a schematic structural diagram of a smart device according to Embodiment 5 of the present invention;
FIG. 10 is a schematic structural diagram of a smart television according to Embodiment 6 of the present invention;
FIG. 11 is a schematic structural diagram of a server at a service end according to Embodiment 6 of the present invention; and
FIG. 12 is a flowchart of a method for providing an application service to a smart television according to Embodiment 6 of the present invention.

### DESCRIPTION OF EMBODIMENTS

To provide an implementation solution to reduce complexity for a user to use a same application service on all types of smart devices and reduce difficulty for a developer in developing an application program, corresponding to a same application service, for all types of smart devices, embodiments of the present invention provide an application service providing method and system, and a related device. With reference to drawings of the specification, the following describes exemplary embodiments of the present invention. It should be understood that the exemplary embodiments described herein are only used for explaining the present invention and are not used for limiting the present invention. In a case of no collision, the embodiments in this application and features of the embodiments may be mutually combined.

An embodiment of the present invention provides an application service providing method, which is applied to a service end. As shown in FIG. 2, the application service providing method includes:
Step 201: Receive a service providing request sent by a smart device, where the service providing request carries device information of the smart device.
Step 202: Determine capability information of the smart device according to the device information.
Step 203: Return, to the smart device, interaction element code that is corresponding to the capability information and is of an application service, so that the smart device provides the application service by running the interaction element code.

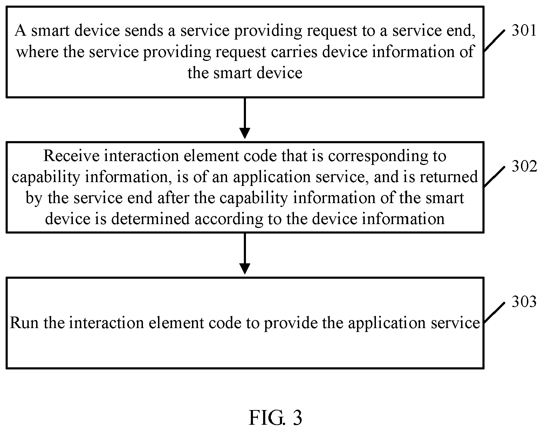

Correspondingly, an embodiment of the present invention further provides an application service providing method, which is applied to a smart device. As shown in FIG. 3, the application service providing method includes:
Step 301: A smart device sends a service providing request to a service end, where the service providing request carries device information of the smart device.
Step 302: Receive interaction element code that is corresponding to capability information, is of an application service, and is returned by the service end after the capability information of the smart device is determined according to the device information.
Step 303: Run the interaction element code to provide the application service.

According to the application service providing methods shown in the foregoing FIG. 2 and FIG. 3, further, the service providing request may further carry a user identifier, or may further carry a user feature, where the user feature may be used for determining a corresponding user identifier; and correspondingly, after the service end is informed of the user identifier, an application service corresponding to the user identifier may further be determined, so as to return, to the smart device, interaction element code that is of the application service corresponding to the user identifier. The application service corresponding to the user identifier may be specified in advance by a user, or may be a recorded application service used by a user, or may be an application service of relatively high using frequency is in a plurality of application services used by a user, or is a recently used application service.

Further, the interaction element code returned to the smart device may further include service content corresponding to the user identifier. The service content may be customized by the user, or may be determined according to a historical using situation, regarding the application service, of the user.

With reference to the drawing, the following describes in detail the method provided in the present invention by using specific embodiments.

### Embodiment 1

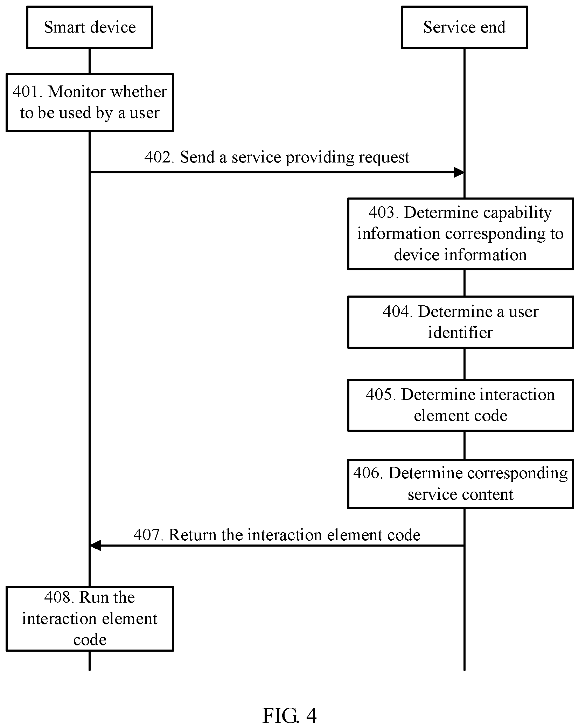

Embodiment 1 of the present invention provides an application service providing method. As shown in FIG. 4, the application service providing method specifically includes the following processing steps:
Step 401: A smart device monitors whether to be used by a user.
In this step, different smart devices may perform monitoring in different manners, so as to determine whether the user tends to use the smart device. For example, for a touchscreen smartphone, when it is detected that a user touches a screen lock, it is determined that the user is to use the smartphone; and for a smart television, when it is detected, by using a camera, that a user sits in front of the television and looks at a television screen, it is determined that the user is to use the smart television.
When a user feature further needs to be sent to a service end subsequently, in this step, the user feature of the user may further be collected after monitoring and determining that the user is to use the smart device. Manners in which different smart devices collect user features may be different. For example, a face feature of the user may be collected by performing face identification by using a camera, a fingerprint feature of the user may be collected by performing fingerprint identification by using a fingerprint identifier, a voice feature of the user may be collected by performing voice identification by using a microphone, an electronic label feature of the user may be collected by performing electronic identity identification by using an electronic label reader, the user feature may be acquired by identifying login information of a built-in program of the smart device, or the like.
During an actual application, the user feature may be first collected, and then, whether the user is to use the smart device is determined.
Step 402: The smart device sends a service providing request to a service end after it is determined that the smart device is to be used by the user, where the service providing request carries device information of the smart device, and further, may also carry a user identifier, or may further carry a user feature, and when there is a plurality of types of user features, a feature type may further be carried.
In this step, the device information of the smart device may be type information of the device, or may be model information of the device.
Step 403: The service end acquires, after receiving the service providing request, the carried device information from the service providing request, and determines capability information of the smart device according to the device information.
Specifically, the determined capability information may include a plurality of types of input/output capability information, for example, an input capability may include an audio input capability, a character input capability, an image input capability, a gravity sensing capability, and the like, and an output capability may include a small-screen displaying capability, a large-screen displaying capability, a voice output capability, a vibration output capability, and the like.
Step 404: When the service providing request further carries the user identifier, or further carries the user feature, the service end may further determine the user identifier after receiving the service providing request.
When the service providing request carries the user identifier, the carried user identifier may be directly acquired from the service providing request.
When the service providing request carries the user feature, the user feature may be acquired from the service providing request, and a user identifier corresponding to the carried user feature is determined.
Specifically, the user identifier corresponding to the user feature may be determined according to a pre-established correspondence between a user feature and a user identifier, as shown in Table 1:

**Table 1: User feature and user identifier correspondence table 1**

| **User feature** | **User identifier** |
|---|---|
| Feature 1 | User1 |
| F eature2 | User1 |
| Feature 3 | User2@aa.com |
| Feature 4 | User2@aa.com |

When the feature type is further carried, the user identifier corresponding to the user feature may also be determined according to a pre-established correspondence between a user feature and a user identifier as shown in Table 2:

**Table 2: User feature and user identifier correspondence table 2**

| **User feature** | **Feature type** | **User identifier** |
|---|---|---|
| Feature 1 | Face | User1 |
| Feature 2 | Fingerprint | User1 |
| Feature 3 | Face | User2@aa.com |
| Feature 4 | Voice | User2@aa.com |

The foregoing correspondence between a user feature and a user identifier may be sent in advance by the user to the service end by using the smart device, and established by the service end.
Step 405: The service end determines interaction element code that is corresponding to the capability information of the smart device and is of the application service.
When the service end is dedicated to one application service, interaction element code that is corresponding to the capability information and is of the application service dedicated to the service end is determined.
When the service end is a service end shared by a plurality of application services, the service end may determine, according to a service identifier carried in the service providing request, interaction element code that is corresponding to the capability information and is of an application service represented by the service identifier, where the service identifier may be specified by the user.
When the service end is a service end shared by a plurality of application services, an application service corresponding to the user identifier determined in the foregoing step 404 may also be first determined, and interaction element code that is corresponding to the capability information and is of the application service corresponding to the user identifier is determined. The application service corresponding to the user identifier may be determined according to a pre-established correspondence between a user identifier and an application service, for example, as shown in Table 3:

**Table 3: User identifier and application service correspondence table 1**

| **User identifier** | **Application service** | **Last using time** | **Total using times** |
|---|---|---|---|
| User1 | Application service 1 | | |
| User1 | Application service 2 | | |
| User2@aa.com | Application service 3 | | |
| User2@aa.com | Application service 4 | | |

As shown in the foregoing Table 3, when one user identifier corresponds to a plurality of application services, based on each corresponding application service, interaction element code that is corresponding to the capability information and is of the application service may be determined separately; or according to last using time shown in Table 3, interaction element code that is corresponding to the capability information and is of an application service meeting a preset time condition may be determined, for example, a last used application service, or an application service, where duration between last using time of the application service and current time is less than a preset duration threshold; or according to total using times shown in Table 3, interaction element code that is corresponding to the capability information and is of an application service meeting a preset time condition may be determined, for example, an application service with most total using time, or an application of which total using times is greater than a preset time threshold.
In this step, for an application service, interaction element code that is corresponding to the capability information and is of the application service may be determined according to a pre-established correspondence between capability information and interaction element code, as shown in Table 4:

**Table 4: Input/output capability and interaction element code correspondence table**

| **Capability type** | **Capability** | **Interaction element code identifier** | **Interaction element code content** |
|---|---|---|---|
| Input | Audio | Code-1 | |
| Input | Character | Code-2 | |
| Input | Image | Code-3 | |
| Input | Gravity sensing | Code-4 | |
| Output | Small screen | Code-5 | |
| Output | Voice | Code-6 | |
| Output | Vibration | Code-7 | |

One or more pieces of interaction element code that are corresponding to the capability information may be determined according to the capability information determined in the foregoing step 403.
In the embodiment of the present invention, a plurality of types of interaction element code is applied to smart devices with different input/output capabilities. Each type of interaction element code may be code formed according to a same preset code standard (for example, a hypertext markup language HTML 5 related standard). All types of interaction element code are distinguished by using an interaction element code identifier, and corresponding interaction element code content may be found by using the interaction element code identifier. In an implementation manner, each type of interaction element code content is stored in an independent file, and a file name is used as an interaction element code identifier. Each type of interaction element code is corresponding to a different input/output capability. For example, if an input capability is audio (that is, a microphone is disposed on the smart device), audio information may be acquired from the microphone by running interaction element code that is corresponding to the audio; and if an output capability is a small screen, various types of controls may be displayed in a compact manner by running interaction element code corresponding to the small screen.
For the input/output capability and interaction element code correspondence table shown in the foregoing Table 4, during an actual application, the foregoing capability type and capability may further be detailed, and a key-value pair (key-value) manner is used for description, for example, for a capability, namely "screen size", different interaction element code may be corresponding to different size ranges.
In this step, when there is a plurality of pieces of determined interaction element code that is corresponding to the capability information, the plurality of pieces of interaction element code may be combined to form compound interaction element code, and the combined interaction element code shall also be in accord with the foregoing preset code standard.
Step 406: Further, the service end may further determine service content that is corresponding to the user identifier and is included in the application service, and add the service content to the interaction element code that is corresponding to the capability information and determined in the foregoing step 406.
The service content may be customized by the user, or may be determined according to a historical using situation, regarding the application service, of the user.
For example, for a music service, the service content corresponding to the user identifier may be a list of music collected by the user, or may be a music list of music played by the user recently.
Step 407: The service end returns, to the smart device, the interaction element code that is corresponding to the capability information and is of the determined application service, and if there is the service content, the service content is further carried.
For different smart devices, the interaction element code may be returned in different communications manners, for example, for a smartphone, the interaction element code may be returned by using a cellular network; and for a smart television and a personal computer, the interaction element code may be returned by using the Internet.
Step 408: The smart device runs the interaction element code after receiving the interaction element code that is returned by the service end, so as to provide the application service to the user.

In this step, the user may be first prompted whether to run the interaction element code, and start, after a running instruction input by the user is received, running the interaction element code.

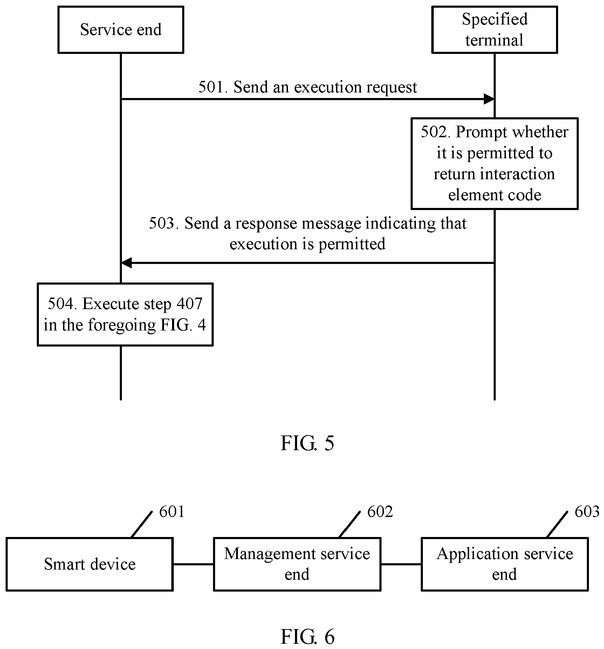

In a process shown in the foregoing FIG. 4, further, in view of a requirement of the user on an actual application of an application service, before the interaction element code is returned to the smart device by using the foregoing step 407, an execution request may be sent to a specified terminal corresponding to the user identifier, and the interaction element code is returned to the smart device only after a response message indicating that execution is permitted and returned by the specified terminal, which may specifically, as shown in FIG. 5, include the following processing steps:
Step 501: The service end sends, after determining the interaction element code that is corresponding to the capability information and is of the application service, an execution request to a specified terminal corresponding to the user identifier, where the execution request is used for requesting whether it is permitted to return the determined interaction element code to the smart device.
   The specified terminal may be specified in advance by the user.
Step 502: The specified terminal, after receiving the execution request, prompts whether it is permitted to return the interaction element code that is determined by the service end to the smart device.
   In this case, if the user expects to return the interaction element code, an instruction indicating that the returning is permitted may be input, if the user does not expect to return the interaction element code, an instruction indicating that the returning is not permitted may be input, or no processing is executed.
Step 503: The specified terminal returns a response message indicating that execution is permitted to the service end after receiving an instruction, input by the user, of running the retuning, sends a response message indicating that execution is not permitted to the service end after receiving an instruction that indicates that the returning is not permitted and is input by the user, or cancels sending a response message to the service end or sends a response message indicating that no user instruction is received to the service end after no instruction that is input by the user is received within preset duration based on a timeout mechanism. Step 504: The service end, after a response message indicating that execution is permitted and returned by the specified terminal is received, executes step 407 shown in the foregoing FIG. 4 and returns, to the smart device, the instruction element code that is corresponding to the capability information and is of the determined application service; or when a response message indicating that execution is permitted and returned by the specified terminal is not received, for example, a response message indicating that execution is not permitted is received, or a response message indicating that no user instruction is received is received, or no response message is received, returning, to the smart device, the interaction element code that is corresponding to the capability information and is of the application service returned by the smart device is cancelled.

By using the foregoing application service providing method provided in Embodiment 1 of the present invention, the smart device only needs to send its device information to the service end, and then, the service end may return interaction element code required during application service providing, so that an application service is provided to the user by running the interaction element code. Different from the prior art, a user does not need to manually download and install corresponding application programs for different types of smart devices, and can use a same application service on all the types of smart devices only by sending device information of the smart devices to the service end, so that implementation complexity is reduced.

In addition, a developer does not need to develop application programs, corresponding to a same application service, for all types of smart devices either, and only needs to develop corresponding interaction element code for capability information of the smart devices, so that difficulty in developing an application program corresponding to a same application service is reduced, development costs are reduced, and developing efficiency is improved. Therefore, for a user, an application service is smoothly provided to the user on a plurality of smart devices. The user may use a service on a smart device without actively installing an application program or downloading other digitized content on each smart device, and the service is automatically spread to another smart device.

In addition, a constitution form of an application program is more flexible, and is not only to develop a pertinent version for each specific operating system platform, but also to improve matching between the application program and a smart device by splitting the application program into all types of interaction element code, and selecting interaction element code with different combinations for different input/output capabilities of the smart device.

### Embodiment 2

Based on a same inventive concept and according to the application service providing method provided in the foregoing embodiment of the present invention, correspondingly, Embodiment 2 of the present invention further provides an application service providing system. A schematic structural diagram of the application service providing system is shown in FIG. 6. The application service providing system specifically includes: a smart device 601, a management service end 602, and an application service end 603.

The smart device 601 is configured to: send a service providing request to the management service end 602, where the service providing request carries device information of the smart device 601; receive interaction element code that is returned by the management service end 603; and run the interaction element code to provide an application service.

The management service end 602 is configured to: receive the service providing request sent by the smart device 601; send the device information of the smart device 601 to the application service end 603; receive the interaction element code that is returned by the application service end 603; and return the interaction element code to the smart device 601. The application service end 603 is configured to: determine capability information of the smart device 601 according to the device information; and return, to the management service end 602, the interaction element code that is corresponding to the capability information and is of the application service.

Further, the service providing request sent by the smart device 601 further carries a user identifier, or the service providing request further carries a user feature.

The management service end 602 is further configured to determine, when the service providing request carries the user feature, a user identifier corresponding to the carried user feature; is further configured to determine an application service corresponding to the user identifier; and is specifically configured to send the device information of the smart device 601 to the application service end 603 corresponding to the application service, and receive interaction element code that is of the application service corresponding to the user identifier and is returned by the application service end 603.

Further, the management service end 602 is further configured to send the user identifier to the application service end 603.

The application service end 603 is further configured to determine service content that is corresponding to the user identifier and is included in the application service; and is specifically configured to return, to the management service end 602, interaction element code that includes the service content, is corresponding to the capability information, and is of the application service.

Further, the management service end 602 is further configured to send, before the interaction element code is returned to the smart device 601, an execution request to a specified terminal corresponding to the user identifier; and receive a response message indicating that execution is permitted and returned by the specified terminal.

Further, the management service end 602 is further configured to: when the response message indicating that execution is permitted and returned by the specified terminal is not received, cancel returning, to the smart device 601, the interaction element code that is corresponding to the capability information and is of the application service.

Further, the smart device 601 is specifically configured to send, after it is determined that the smart device 601 is to be used by a user, the service providing request to the service end. Further, the application service end 603 is specifically configured to return, to the management service end 602, a plurality of pieces of interaction element code that is corresponding to the capability information and is of the application service.

The management service end 602 is specifically configured to return the plurality of pieces of interaction element code to the smart device 601.

The smart device 601 is specifically configured to: receive the plurality of pieces of interaction element code returned by the management service end 602; and run the plurality of pieces of interaction element code to provide the application service.

Functions of units in the foregoing application service providing system may correspond to corresponding processing steps in the processes shown in FIG. 2 to FIG. 5, and no detail is repeatedly described herein.

### Embodiment 3

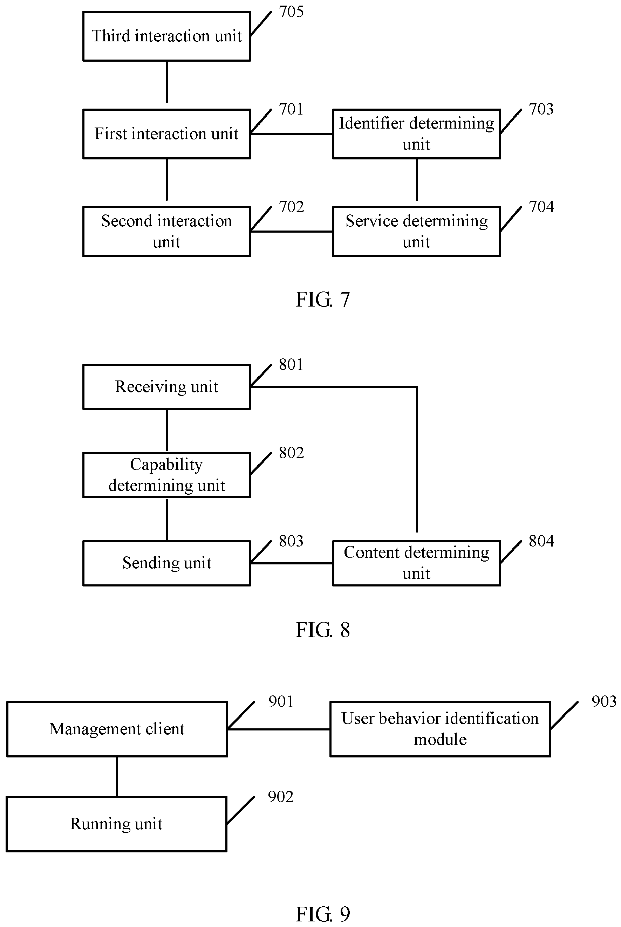

Based on a same inventive concept and according to the application service providing method and system provided in the foregoing embodiments of the present invention, correspondingly, Embodiment 3 of the present invention further provides a management service end. A schematic structural diagram of the management service end is shown in FIG. 7. The management service end specifically includes:
a first interaction unit 701, configured to: receive the service providing request sent by the smart device, where the service providing request carries device information of the smart device; and return interaction element code to the smart device, so that the smart device provides an application service by running the interaction element code; and
a second interaction unit 702, configured to: send the device information of the smart device to an application service end; and receive interaction element code that is corresponding to capability information, is of the application service, and is returned by the application service end after the capability information of the smart device is determined according to the device information.

Further, the service providing request sent by the smart device further carries a user identifier, or the service providing request further carries a user feature.

The foregoing management service end further includes:
an identifier determining unit 703, configured to determine, when the service providing request carries the user feature, a user identifier corresponding to the carried user feature; and
a service determining unit 704, configured to determine an application service corresponding to the user identifier.

The second interaction unit 702 is specifically configured to send the device information of the smart device to the application service end corresponding to the application service, and receive interaction element code that is of the application service corresponding to the user identifier and is returned by the application service end.

Further, the second interaction unit 702 is further configured to send the user identifier to the application service end; and is specifically configured to receive interaction element code that includes service content, is corresponding to the capability information, is of the application service, and is returned by the application service end after the service content that is corresponding to the user identifier and is included in the application service is determined.

Further, the foregoing management service end further includes:
a third interaction unit 705, configured to: before the first interaction unit 701 returns the interaction element code to the smart device, send an execution request to a specified terminal corresponding to the user identifier; and receive a response message indicating that execution is permitted and returned by the specified terminal.

Further, the first interaction unit 701 is further configured to: when the third interaction unit 705 does not receive the response message indicating that execution is permitted and returned by the specified terminal, cancel returning, to the smart device, the interaction element code that is corresponding to the capability information and is of the application service.

Further, the first interaction unit 701 is specifically configured to return a plurality of pieces of interaction element code to the smart device, so that the smart device provides the application service by running the plurality of pieces of interaction element code.

Functions of units in the foregoing management service end may correspond to corresponding processing steps in the processes shown in FIG. 2 to FIG. 5, and no detail is repeatedly described herein.

According to the application service providing method and system provided in the foregoing embodiments of the present invention, correspondingly, an application service end is provided. A schematic structural diagram of the management service end is shown in FIG. 8. The application service end specifically includes:
a receiving unit 801, configured to receive device information of a smart device sent by a management service end;
a capability determining unit 802, configured to determine capability information of the smart device according to the device information; and
a sending unit 803, configured to return, to the management service end, interaction element code that is corresponding to the capability information and is of an application service, and configured to return the interaction element code to the smart device by using the management service end, so that the smart device provides the application service by running the interaction element code.

Further, the receiving unit 801 is further configured to receive a user identifier sent by the management service end.

The application service end further includes:
a content determining unit 804, configured to determine service content that is corresponding to the user identifier and is included in the application service.

The sending unit 803 is specifically configured to return, to the management service end, interaction element code that includes the service content, is corresponding to the capability information, and is of the application service.

Further, the sending unit 803 is specifically configured to return, to the management service end, a plurality of pieces of interaction element code that is corresponding to the capability information and is of the application service.

Functions of units in the foregoing application service end may correspond to corresponding processing steps in the processes shown in FIG. 2 to FIG. 5, and no detail is repeatedly described herein.

According to the application service providing method provided in the foregoing embodiment of the present invention, correspondingly, a smart device is described. A schematic structural diagram of the smart device is shown in FIG. 9. The smart device specifically includes:
a management client 901, configured to: send a service providing request to a service end, where the service providing request carries device information of the smart device; and receive interaction element code that is corresponding to capability information, is of the application service, and is returned by the service end after the capability information of the smart device is determined according to the device information; and
a running unit 902, configured to run the interaction element code to provide the application service.

Further, the service providing request further carries a user identifier, or the service providing request further carries a user feature, used by the service end to determine a user identifier corresponding to the user feature.

The management client 901 is specifically configured to receive interaction element code that is corresponding to the capability information, is of an application service corresponding to the user identifier, and is returned by the service end; or
receive interaction element code that includes service content corresponding to the user identifier, is corresponding to the capability information, is of an application service corresponding to the user identifier, and is returned by the service end.

Further, the foregoing smart device further includes:
a user behavior identification module 903, configured to determine that the smart device is to be used by a user.

The management client 901 is specifically configured to send, after the user behavior identification module 903 determines that the smart device is to be used by the user, the service providing request to the service end.

Further, the management client 901 is specifically configured to receive a plurality of pieces of interaction element code that is corresponding to the capability information, is of the application service, and is returned by the service end.

The running unit 902 is specifically configured to run the plurality of pieces of interaction element code to provide the application service.

Functions of units in the foregoing smart device may correspond to corresponding processing steps in the processes shown in FIG. 2 to FIG. 5, and no detail is repeatedly described herein.

Based on the application service providing system, the management service end, and the application service end described above, a smart device in the form of a smart television is used as an example to describe in detail an application service providing solution proposed in the embodiment of the present invention.

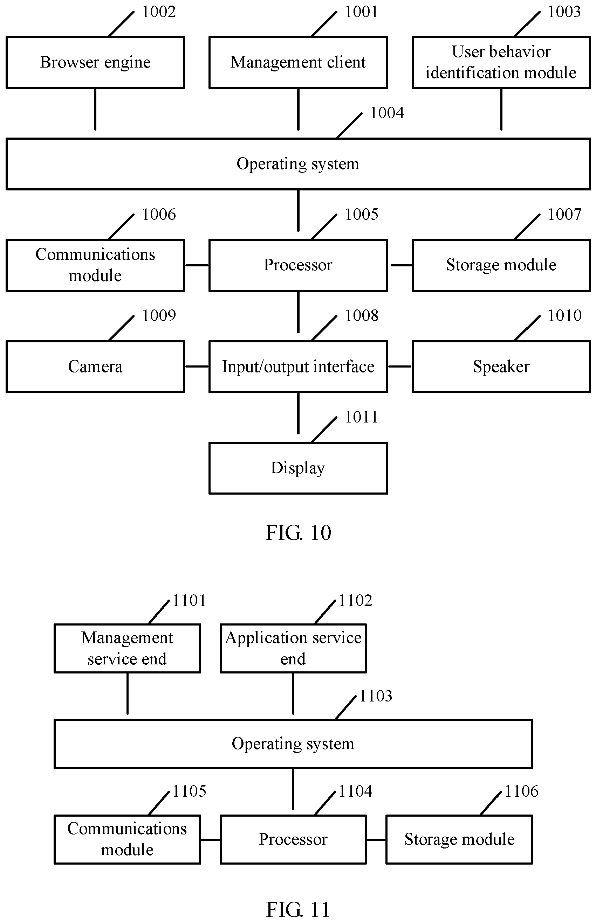

A structure of a smart television may, as shown in FIG. 10, include: virtual structures, such as a management client 1001, a browser engine 1002, a user behavior identification module 1003, and an operating system 1004, and physical structures, such as a processor 1005, a communications module 1006, a storage module 1007, an input/output interface 1008, a camera 1009, a speaker 1010, and a display 1011.

There may be one or more cameras 1009 configured to shoot an object in front of the smart television, so that the user behavior identification module 1003 determines whether a user is to use the smart television.

The display 1011 is configured to display an image or a video. The speaker 1010 is configured to play a voice. The display 1011, the speaker 1010, and the camera all may be connected to the processor by using the input/output interface.

The communications module 1006 may use wired communications, such as an Ethernet interface and an optical fiber interface; or may use wireless communications, such as a WiFi wireless WAN card and a Bluetooth module. The communications module 1006 enables the smart television to connect to the Internet, so that a server deployed on the Internet can be accessed.

The storage module 1007 may include a persistent storage module and a non-persistent storage module. The persistent storage module may be a hard disk, an SD card, or the like, and is configured to store the operating system 1004, the browser engine 1002, the management module client 1001, the user behavior identification module 1003, and another application program; and the non-persistent storage module may be a memory, and when a program runs, data needs to be acquired from the persistent storage and loaded to the memory, and the memory may further store temporary data generated during a program running process.

The operating system 1004 is a running environment of a program, encapsulates a hardware capability of the smart television, and is called by an application program in a software interface form.

The browser engine 1002 runs on the operating system, can parse content that is in accord with an Internet standard, for example, content, such as an HTML, a client scripting language Javascript, and cascading style sheets CSS, and can execute the foregoing content. In this embodiment, interaction element code is a combination of code information in accord with the Internet standard, for example, Web application code developed based on HTML 5.

The user behavior identification module 1003 may analyze an operation, regarding the smart television, of a user to determine whether the user is to use the smart television; and a user feature is extracted by analyzing a face image of the user. In addition, after it is determined that the user is to use the smart television, the extracted user feature and a user feature type are sent to the management client 1001.

The management client 1001 sends the user feature, the user feature type, device information of the smart television, and a user identifier to a management service end, receives interaction element code that is returned by the management service end, transmits the interaction element code to the browser engine 1002 for performing running processing, so as to complete providing an application service to the user. For details, refer to related descriptions above. According to an embodiment the management service end and an application service end of the service end may be disposed on a same server hardware device, or the management service end and an application service end may be disposed on different server hardware devices. That the management service end and the application service end are disposed on a same server hardware device is used as an example. As shown in FIG. 11, the server may include: virtual structures, such as a management service end 1101, an application service end 1102, and an operating system 1103, and physical structures, such as a processor 1104, a communications module 1105, and a storage module 1106.

Functions of the communications module 1105, the processor 1104, the storage module 1106, and the operating system 1103 are similar to those of the smart television shown in FIG. 10, but the server may use software and hardware modules with stronger capabilities according to its own requirement on a processing capability.

The management service end 1101 receives a service providing request sent by the management client 1001, acquires a user identifier, or analyzes an obtained user feature to determine a corresponding user identifier, sends the user identifier and device information of a smart device to the application service end 1102, receives interaction element code from the application service end 1102, and returns the interaction element code to the management service end 1101.

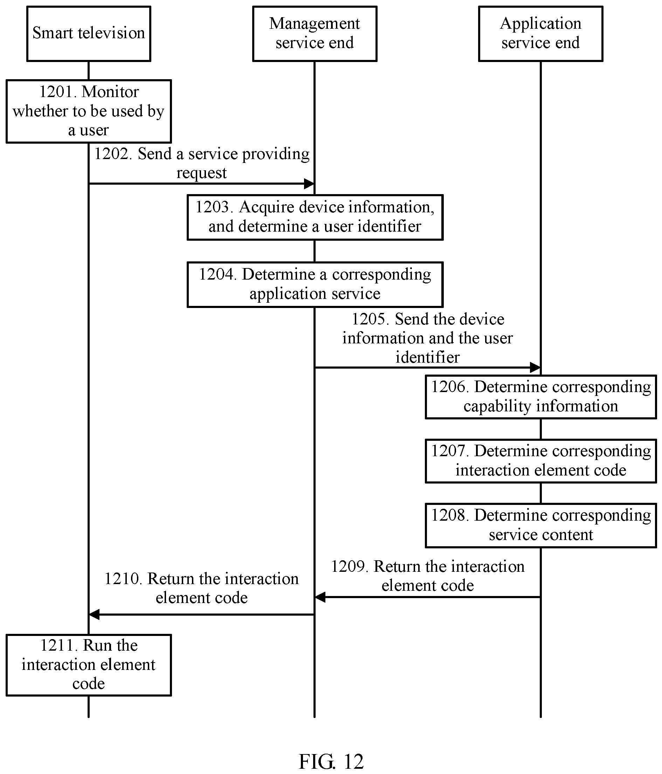

The application service end 1102 provides a specific service, and may record a using history each time when the user uses a service; the application service end 1102 may further maintain a group of interaction element code, different interaction element code is adaptive to different input/output capabilities of the smart device, can display an interaction interface between a user and an application by running, so that an application service is provided to the user. Based on the foregoing structures shown in the FIG. 10 and FIG 11, Embodiment 6 of the present invention provides a method for providing an application service by using a smart television. As shown in FIG. 12, the method includes:
Step 1201: A smart television monitors whether to be used by a user.
The smart television may monitor whether a user tends to use the smart television by using a plurality of means. For example, when the user turns on a power switch, or in a case in which a power supply is switched on, the smart television may determine whether the user is to use the smart television when it is detected by using the camera 1009 that the user sits in front of a television screen.
The smart television may further identify and collect a user feature of the user by using a plurality of means. For example, a face feature of the user is collected by performing, by the camera 1009, human face detection and performing face identification, a voice feature of the user may be collected by performing voice identification by using a microphone (this part is not shown in the foregoing FIG. 10, may be disposed on a smart television set, or may be disposed on a remote controller of the smart television), and an electronic label of the user is accurately identified by using a near field communication (NFC, Near Field Communication) card reader (this part is not shown in the foregoing FIG. 10, and may be disposed in the same way as the microphone).
Above all, no matter in which manner the user feature is identified, a corresponding sensor part needs to be correspondingly disposed on the smart television or a peripheral device of the smart television. For example, a dedicated remote controller and a remote controller which a smartphone acts as both belong to the peripheral device. An identification result includes: a user feature type and user feature data, where the former may refer to a user feature extracted by using which means, such as, a human face, a voice, and an NFC label, and the latter is user feature data based on the former type.
Step 1202: The smart television sends, after it is determined that the smart television is to be used by the user, a service providing request to a management service end 1101 by using a management client 1001. The service providing request carries device information of the smart device and a user feature, and when there is a plurality of user feature types, a user feature type may further be carried.
In this step, the communications module 1006 of the smart television enables the smart television to connect to a network, and may communicate with a server.
The management client 1001 may send the service providing request to the management service end 1101 by using the HTTP protocol. Content of the service providing request, for example, is as follows:

```
           <?xml version="1.0" encoding="UTF-8"?>
           <requestService>
           <userFeatureType>face feature </userFeatureType> //a user feature type is a face
           feature
           <userFeature> .....</userFeature> //face feature data
           <deviceType> smart television </deviceType> //a device is a smart television,
           or may be represented by a code name
           <requestService>
```

Step 1203: The management service end 1101 acquires, after receiving the service providing request, carried device information and the user feature from the service providing request, and determines a corresponding user identifier according to the user feature. The user identifier may be specifically determined based on Table 1 and Table 2 in step 404 shown in the foregoing FIG. 4, and no detail is repeatedly described herein.
Step 1204: The management service end 1101 determines, after determining the user identifier corresponding to the user feature, an application service corresponding to the user identifier, where the application service may be specifically determined based on Table 3 in step 405 shown in the foregoing FIG. 4, or determines an application service address corresponding to the user identifier by using the following Table 5, so that interaction element code is subsequently requested from the application service end 1102 identified by the corresponding application service address.

**Table 5: User identifier and application service correspondence table 2**

| **User identifier** | **Application service** | **Last using time** | **Total using times** |
|---|---|---|---|
| User1 | Application service address 1 | | |
| User1 | Application service address 2 | | |
| User2@aa.com | Application service address 3 | | |
| User2@aa.com | Application service address 4 | | |

Step 1205: The management service end 1101 sends the device information of the smart television and the user identifier to an application service end 1102 (which may also be an application service end represented by the corresponding application service address) of the application service corresponding to the user identifier.
Step 1206: The application service end 1102 determines, after receiving the device information of the smart television and the user identifier, capability information of the smart television according to the device information.
Specifically, the determined capability information may include a plurality of types of input/output capability information, for example, an input capability may include an audio input capability, a character input capability, an image input capability, a gravity sensing capability, and the like, and an output capability may include a small-screen displaying capability, a large-screen displaying capability, a voice output capability, a vibration output capability, and the like.
Step 1207: The application service end 1102 determines interaction element code that is corresponding to the capability information of the smart television and is of the application service. The interaction element code may be specifically determined according to a pre-established correspondence between capability information and interaction element code, as shown in Table 4 in step 405 shown in the foregoing FIG. 4, and no detail is repeatedly described herein.
Step 1208: Further, the application service end 1102 may further determine service content that is corresponding to the user identifier and is included in the application service, and add the service content to the interaction element code that is corresponding to the capability information and determined in the foregoing step 1207.
The service content may be customized by the user, or may be determined according to a historical using situation, regarding the application service, of the user.
For example, for a music service, the service content corresponding to the user identifier may be a list of music collected by the user, or may be a music list of music played by the user recently.
Step 1209: The application service end 1102 returns, to the management service end 1101, the interaction element code that is corresponding to the capability information and is of the determined application service, where the interaction element code may further include the service content corresponding to the user identifier.
In the embodiment of the present invention, the management service end 1101 may communicate with the application service end 1102 by using the HTTP or TCP protocol.
Step 1210: The management service end 1101 returns, to the smart television after receiving the interaction element code that is returned by the application service end 1102, the interaction element code that is corresponding to the capability information, is of the application service, and is returned by the application service end 1102.
Step 1211: The smart television explains and runs, after receiving the interaction element code that is returned by the management service end 1101, the interaction element code by using the browser engine 1002.

According to Embodiment 6 of the present invention, when a user uses a music service on a smartphone, there is only audio-related interaction element code; and when the application is transferred to the smart television, the interaction element code may include video content.

In this step, the user may be first prompted whether to run the interaction element code, and start, after a running instruction input by the user is received, running the interaction element code.

In the process shown in the foregoing FIG. 12, further, before the interaction element code is returned to the smart television by using the foregoing step 1210, an execution request may also be sent to a specified terminal corresponding to the user identifier, and after a response message indicating that execution is permitted and returned by the specified terminal is received, the interaction element code is returned to the smart device, as shown in FIG. 5, and no detail is repeatedly described herein.

The management client, the management service end, and the application service end that are provided in the embodiment of this application may be implemented by using a computer program. A person skilled in the art shall understand that, the foregoing module division manner is merely one of numerous module division manners, and division into other modules or no modules shall fall within the protection scope of this application as long as the management client, the management service end, and the application service end have the foregoing functions.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer readable memory that can instruct the computer or any other programmable data processing device to work in a specific manner, so that instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams. Obviously, a person skilled in the art can make various modifications and variations to the present invention. The present invention is intended to cover these modifications and variations provided that they fall within the scope of protection defined by the following claims. The embodiments described hereinabove are to be considered as examples and the scope of protection is defined only by the appended claims.

## Claims

1. An application service providing method, comprising:
receiving (201) a service providing request sent by a smart device, wherein the service providing request carries device information of the smart device;
determining (202) capability information of the smart device according to the device information; and
returning (203), to the smart device, interaction element code that is corresponding to the capability information and is of an application service, wherein the interaction element code, when run by the smart device, provides the application service on the smart device;
wherein the interaction element code that is corresponding to the capability information comprises a plurality of pieces of interaction element code, the plurality of pieces of interaction element code, when run by the smart device, provides the application service on the smart device, and wherein, the method further comprises selecting a plurality of types of interaction element code to constitute the application service, each type of interaction element code corresponding to a different input/output capability of the smart device;
wherein the service providing request further carries a user identifier, or the service providing request further carries a user feature;
when the user feature is carried, the method further comprises: determining a user identifier corresponding to the carried user feature; and
the returning, to the smart device, interaction element code that is corresponding to the capability information and is of an application service specifically comprises:
determining an application service corresponding to the user identifier; and
returning, to the smart device, interaction element code that is corresponding to the capability information and is of the application service corresponding to the user identifier;
wherein, when the user identifier corresponds to a plurality of application services,
interaction element code that is corresponding to the capability information and is of the application service is determined separately for each corresponding application service; or
according to a last using time, interaction element code that is corresponding to the capability information and is of an application service meeting a preset time condition is determined; or
an application service, for which a duration between a last using time of the application service and a current time is less than a preset duration threshold is determined; or
according to a number of total using times, interaction element code that is corresponding to the capability information and is of an application service meeting a preset time condition is determined, or an application service of which total using times is greater than a preset time threshold is determined;
wherein before the returning, to the smart device, interaction element code that is corresponding to the capability information and is of an application service, the method further comprises:
sending an execution request to a specified terminal corresponding to the user identifier; and
receiving a response message indicating that execution is permitted and returned by the specified terminal.

2. The method according to claim 1, wherein before the returning, to the smart device, interaction element code that is corresponding to the capability information and is of the application service corresponding to the user identifier, the method further comprises:
determining service content that is corresponding to the user identifier and is comprised in the application service corresponding to the user identifier; and
the returning, to the smart device, interaction element code that is corresponding to the capability information and is of the application service corresponding to the user identifier is specifically:
returning, to the smart device, interaction element code that comprises the service content, is corresponding to the capability information, and is of the application service corresponding to the user identifier.

3. The method according to claim 2, wherein the service content corresponding to the user identifier is determined according to a historical using situation, regarding the application service, of a user corresponding to the user identifier; and/or
the service content corresponding to the user identifier is customized by the user corresponding to the user identifier.

4. The method according to any of claims 1 to 3, further comprising:
when the response message indicating that execution is permitted and returned by the specified terminal is not received, cancelling the returning, to the smart device, interaction element code that is corresponding to the capability information and is of an application service.

5. A management service end, comprising:
a first interaction unit (701), configured to: receive a service providing request sent by a smart device, wherein the service providing request carries device information of the smart device; and return interaction element code to the smart device, so that the smart device provides an application service by running the interaction element code; and
a second interaction unit (702), configured to: send the device information of the smart device to an application service end; and receive interaction element code that is corresponding to capability information, is of the application service, and is returned by the application service end after the capability information of the smart device is determined according to the device information;
wherein, the first interaction unit is configured to return a plurality of pieces of interaction element code to the smart device, the plurality of pieces of interaction element code, when run by the smart device, provide the application service; and wherein, the first interaction unit is configured to select a plurality of types of interaction element code to constitute the application service, each type of interaction element code corresponding to a different input/output capability of the smart device;
wherein the service providing request sent by the smart device further carries a user identifier, or the service providing request further carries a user feature; and
the management service end further comprises:
an identifier determining unit (703), configured to determine, when the service providing request carries the user feature, a user identifier corresponding to the carried user feature; and
a service determining unit (704), configured to determine an application service corresponding to the user identifier, wherein
the second interaction unit is specifically configured to send the device information of the smart device to the application service end corresponding to the application service, and receive interaction element code that is of the application service corresponding to the user identifier and is returned by the application service end;
wherein, when the user identifier corresponds to a plurality of application services, the management service end is configured to determine interaction element code that is corresponding to the capability information and is of the application service separately for each corresponding application service; or to determine, according to a last using time, interaction element code that is corresponding to the capability information and is of an application service meeting a preset time condition; or to determine an application service, for which a duration between a last using time of the application service and a current time is less than a preset duration threshold; or to determine, according to a number of total using times, interaction element code that is corresponding to the capability information and is of an application service meeting a preset time condition, or to determine an application service of which total using times is greater than a preset time threshold;
wherein the management service end is further configured for, before returning, to the smart device, interaction element code that is corresponding to the capability information and is of an application service,
sending an execution request to a specified terminal corresponding to the user identifier; and
receiving a response message indicating that execution is permitted and returned by the specified terminal.

6. The management service end according to claim 5, wherein the management service end is further configured for, before returning, to the smart device, interaction element code that is corresponding to the capability information and is of the application service corresponding to the user identifier:
determining service content that is corresponding to the user identifier and is comprised in the application service corresponding to the user identifier; and
wherein, the returning, to the smart device, interaction element code that is corresponding to the capability information and is of the application service corresponding to the user identifier is specifically:
returning, to the smart device, interaction element code that comprises the service content, is corresponding to the capability information, and is of the application service corresponding to the user identifier.

7. The management service end according to claim 6, wherein the management service end is further configured to determine the service content corresponding to the user identifier according to a historical using situation, regarding the application service, of a user corresponding to the user identifier; and/or to determine service content corresponding to the user identifier customized by the user corresponding to the user identifier.

8. The management service end according to any of claims 5 to 7, wherein:
when the response message indicating that execution is permitted and returned by the specified terminal is not received, the management service end is further configured for cancelling the returning, to the smart device, interaction element code that is corresponding to the capability information and is of an application service.

## Patentansprüche

1. Anwendungsdienstbereitstellungsverfahren, das Folgendes umfasst:
Empfangen (201) einer Dienstbereitstellungsanforderung, die von einer intelligenten Vorrichtung gesendet wurde, wobei die Dienstbereitstellungsanforderung Vorrichtungsinformationen der intelligenten Vorrichtung enthält;
Bestimmen (202) von Fähigkeitsinformationen der intelligenten Vorrichtung gemäß den Vorrichtungsinformationen und
Zurückgeben (203), an die intelligente Vorrichtung, eines Interaktionselementcodes, der den Fähigkeitsinformationen entspricht und sich auf einen Anwendungsdienst bezieht, wobei der Interaktionselementcode, wenn er von der intelligenten Vorrichtung ausgeführt wird, den Anwendungsdienst auf der intelligenten Vorrichtung bereitstellt;
wobei der Interaktionselementcode, der den Fähigkeitsinformationen entspricht, eine Vielzahl von Teilen von Interaktionselementcode umfasst, wobei die Vielzahl von Teilen von Interaktionselementcode, wenn sie von der intelligenten Vorrichtung ausgeführt wird, den Anwendungsdienst auf der intelligenten Vorrichtung bereitstellt und wobei das Verfahren ferner das Auswählen einer Vielzahl von Typen von Interaktionselementcode umfasst, um den Anwendungsdienst zu konstituieren, wobei jeder Typ von Interaktionselementcode einer anderen Eingabe-/Ausgabefähigkeit der intelligenten Vorrichtung entspricht;
wobei die Dienstbereitstellungsanforderung ferner eine Benutzerkennung mitführt oder die Dienstbereitstellungsanforderung ferner ein Benutzermerkmal mitführt;
wenn das Benutzermerkmal mitgeführt ist, das Verfahren ferner Folgendes umfasst:
Bestimmen einer Benutzerkennung, die dem mitgeführten Benutzermerkmal entspricht; und
das Zurückgeben, an die intelligente Vorrichtung, von Interaktionselementcode, der den Fähigkeitsinformationen entspricht und sich auf einen Anwendungsdienst bezieht, speziell Folgendes umfasst:
Bestimmen eines Anwendungsdienstes, der der Benutzerkennung entspricht; und
Zurückgeben, an die intelligente Vorrichtung, von Interaktionselementcode, der den Fähigkeitsinformationen entspricht und sich auf einen Anwendungsdienst bezieht, der der Benutzerkennung entspricht;
wobei, wenn die Benutzerkennung einer Vielzahl von Anwendungsdiensten entspricht, Interaktionselementcode, der den Fähigkeitsinformationen entspricht und sich auf den Anwendungsdienst bezieht, für jeden entsprechenden Anwendungsdienst separat bestimmt wird; oder
gemäß einer letzten Verwendungszeit Interaktionselementcode, der den Fähigkeitsinformationen entspricht und sich auf einen Anwendungsdienst bezieht,
der eine voreingestellte Zeitbedingung erfüllt, bestimmt wird; oder
ein Anwendungsdienst, für den eine Dauer zwischen einer letzten Verwendungszeit des Anwendungsdienstes und einer aktuellen Zeit kleiner ist als ein voreingestellter Dauerschwellwert, bestimmt wird; oder
gemäß einer Anzahl von Gesamtverwendungszeiten Interaktionselementcode, der den Fähigkeitsinformationen entspricht und sich auf einen Anwendungsdienst bezieht, der eine voreingestellte Zeitbedingung erfüllt, bestimmt wird oder ein Anwendungsdienst, dessen Gesamtverwendungszeiten größer ist als ein voreingestellter Zeitschwellwert, bestimmt wird;
wobei vor dem Zurückgeben, an die intelligente Vorrichtung, von Interaktionselementcode, der den Fähigkeitsinformationen entspricht und sich auf einen Anwendungsdienst bezieht, das Verfahren ferner Folgendes umfasst:
Senden einer Ausführungsanforderung an ein spezifiziertes Endgerät, das der Benutzerkennung entspricht; und
Empfangen einer Antwortnachricht, die anzeigt, dass eine Ausführung zulässig ist, und vom spezifizierten Endgerät zurückgegeben wird.

2. Verfahren nach Anspruch 1, wobei vor dem Zurückgeben, an die intelligente Vorrichtung, von Interaktionselementcode, der den Fähigkeitsinformationen entspricht und sich auf einen Anwendungsdienst bezieht, der der Benutzerkennung entspricht, das Verfahren ferner Folgendes umfasst:
Bestimmen eines Dienstinhalts, der der Benutzerkennung entspricht und im Anwendungsdienst, der der Benutzerkennung entspricht, enthalten ist; und
das Zurückgeben, an die intelligente Vorrichtung, von Interaktionselementcode, der den Fähigkeitsinformationen entspricht und sich auf einen Anwendungsdienst bezieht, der der Benutzerkennung entspricht, speziell Folgendes ist:
Zurückgeben, an die intelligente Vorrichtung, von Interaktionselementcode, der den Dienstinhalt enthält, den Fähigkeitsinformationen entspricht und sich auf einen Anwendungsdienst bezieht, der der Benutzerkennung entspricht.

3. Verfahren nach Anspruch 2, wobei der Dienstinhalt, der der Benutzerkennung entspricht, mit Bezug auf den Anwendungsdienst gemäß einer historischen Verwendungssituation eines Benutzers, der der Benutzerkennung entspricht, bestimmt wird und/oder
der Dienstinhalt, der der Benutzerkennung entspricht, vom Benutzer, der der Benutzerkennung entspricht, angepasst wird.

4. Verfahren nach einem der Ansprüche 1 bis 3, das ferner Folgendes umfasst:
wenn die Antwortnachricht, die anzeigt, dass eine Ausführung zulässig ist, und vom spezifizierten Endgerät zurückgegeben wird, nicht empfangen wird, Abbrechen des Zurückgebens, an die intelligente Vorrichtung, von Interaktionselementcode, der den Fähigkeitsinformationen entspricht und sich auf einen Anwendungsdienst bezieht.

5. Verwaltungsdienstende, das Folgendes umfasst:
eine erste Interaktionseinheit (701), die zu Folgendem ausgelegt ist: Empfangen einer Dienstbereitstellungsanforderung, die von einer intelligenten Vorrichtung gesendet wird, wobei die Dienstbereitstellungsanforderung Vorrichtungsinformationen der intelligenten Vorrichtung mitführt; und Zurückgeben von Interaktionselementcode an die intelligente Vorrichtung, derart, dass die intelligente Vorrichtung durch Ausführen des Interaktionselementcodes einen Anwendungsdienst bereitstellt; und
eine zweite Interaktionseinheit (702), die zu Folgendem ausgelegt ist: Senden der Vorrichtungsinformationen der intelligenten Vorrichtung an ein Anwendungsdienstende; und Empfangen von Interaktionselementcode, der den Fähigkeitsinformationen entspricht, sich auf den Anwendungsdienst bezieht und vom Anwendungsdienstende zurückgegeben wird, nachdem die Fähigkeitsinformationen der intelligenten Vorrichtung gemäß den Vorrichtungsinformationen bestimmt wurden;
wobei die erste Interaktionseinheit dazu ausgelegt ist, eine Vielzahl von Teilen von Interaktionselementcode an die intelligente Vorrichtung zurückzugeben, wobei die Vielzahl von Teilen von Interaktionselementcode, wenn sie von der intelligenten Vorrichtung ausgeführt wird, den Anwendungsdienst bereitstellt; und wobei die erste Interaktionseinheit dazu ausgelegt ist, eine Vielzahl von Typen von Interaktionselementcode auszuwählen, um den Anwendungsdienst zu konstituieren,
wobei jeder Typ von Interaktionselementcode einer anderen Eingabe-/Ausgabefähigkeit der intelligenten Vorrichtung entspricht;
wobei die Dienstbereitstellungsanforderung, die von der intelligenten Vorrichtung gesendet wird, ferner eine Benutzerkennung mitführt oder die Dienstbereitstellungsanforderung ferner ein Benutzermerkmal mitführt und das Verwaltungsdienstende ferner Folgendes umfasst:
eine Kennungsbestimmungseinheit (703), die dazu ausgelegt ist, wenn die Dienstbereitstellungsanforderung das Benutzermerkmal mitführt, eine Benutzerkennung, die dem mitgeführten Benutzermerkmal entspricht, zu bestimmen; und
eine Dienstbestimmungseinheit (704), die dazu ausgelegt ist, einen Anwendungsdienst, der der Benutzerkennung entspricht, zu bestimmen, wobei die zweite Interaktionseinheit speziell dazu ausgelegt ist, die Vorrichtungsinformationen der intelligenten Vorrichtung an das Anwendungsdienstende, das dem Anwendungsdienst entspricht, zu senden und Interaktionselementcode, der sich auf den Anwendungsdienst bezieht, der der Benutzerkennung entspricht und vom Anwendungsdienstende zurückgegeben wird, zu empfangen;
wobei, wenn die Benutzerkennung einer Vielzahl von Anwendungsdiensten entspricht, das Verwaltungsdienstende dazu ausgelegt ist, Interaktionselementcode, der den Fähigkeitsinformationen entspricht und sich auf den Anwendungsdienst bezieht, für jeden entsprechenden Anwendungsdienst separat zu bestimmen oder gemäß einer letzten Verwendungszeit Interaktionselementcode, der den Fähigkeitsinformationen entspricht und sich auf einen Anwendungsdienst bezieht, der eine voreingestellte Zeitbedingung erfüllt, zu bestimmen oder
einen Anwendungsdienst, für den eine Dauer zwischen einer letzten Verwendungszeit des Anwendungsdienstes und einer aktuellen Zeit kleiner ist als ein voreingestellter Dauerschwellwert, zu bestimmen oder
gemäß einer Anzahl von Gesamtverwendungszeiten Interaktionselementcode, der den Fähigkeitsinformationen entspricht und sich auf einen Anwendungsdienst bezieht, der eine voreingestellte Zeitbedingung erfüllt, zu bestimmen oder einen Anwendungsdienst, dessen Gesamtverwendungszeiten größer ist als ein voreingestellter Zeitschwellwert, zu bestimmen;
wobei das Verwaltungsdienstende vor dem Zurückgeben, an die intelligente Vorrichtung, von Interaktionselementcode, der den Fähigkeitsinformationen entspricht und sich auf einen Anwendungsdienst bezieht, ferner zu Folgendem ausgelegt ist,
Senden einer Ausführungsanforderung an ein spezifiziertes Endgerät, das der Benutzerkennung entspricht; und
Empfangen einer Antwortnachricht, die anzeigt, dass eine Ausführung zulässig ist, und vom spezifizierten Endgerät zurückgegeben wird.

6. Verwaltungsdienstende nach Anspruch 5, wobei das Verwaltungsdienstende vor dem Zurückgeben, an die intelligente Vorrichtung, von Interaktionselementcode, der den Fähigkeitsinformationen entspricht und sich auf einen Anwendungsdienst bezieht, der der Benutzerkennung entspricht, ferner zu Folgendem ausgelegt ist:
Bestimmen eines Dienstinhalts, der der Benutzerkennung entspricht und im Anwendungsdienst, der der Benutzerkennung entspricht, enthalten ist; und
wobei das Zurückgeben, an die intelligente Vorrichtung, von Interaktionselementcode, der den Fähigkeitsinformationen entspricht und sich auf einen Anwendungsdienst bezieht, der der Benutzerkennung entspricht, speziell Folgendes ist:
Zurückgeben, an die intelligente Vorrichtung, von Interaktionselementcode, der den Dienstinhalt enthält, den Fähigkeitsinformationen entspricht und sich auf einen Anwendungsdienst bezieht, der der Benutzerkennung entspricht.

7. Verwaltungsdienstende nach Anspruch 6, wobei das Verwaltungsdienstende ferner dazu ausgelegt ist, den Dienstinhalt, der der Benutzerkennung entspricht, mit Bezug auf den Anwendungsdienst gemäß einer historischen Verwendungssituation eines Benutzers, der der Benutzerkennung entspricht, zu bestimmen und/oder Dienstinhalt, der der Benutzerkennung entspricht und vom Benutzer, der der Benutzerkennung entspricht, angepasst wurde, zu bestimmen.

8. Verwaltungsdienstende nach einem der Ansprüche 5 bis 7, wobei: wenn die Antwortnachricht, die anzeigt, dass eine Ausführung zulässig ist, und vom spezifizierten Endgerät zurückgegeben wird, nicht empfangen wird, das Verwaltungsdienstende ferner zum Abbrechen des Zurückgebens, an die intelligente Vorrichtung, von Interaktionselementcode, der den Fähigkeitsinformationen entspricht und sich auf einen Anwendungsdienst bezieht, ausgelegt ist.

## Revendications

1. Procédé de fourniture de service d'application, comprenant :
la réception (201) d'une demande de fourniture de service envoyée par un dispositif intelligent, dans lequel la demande de fourniture de service transporte des informations de dispositif du dispositif intelligent ;
la détermination (202) d'informations de capacité du dispositif intelligent conformément aux informations de dispositif ; et
le renvoi (203), au dispositif intelligent, d'un code d'élément d'interaction qui correspond aux informations de capacité et provient d'un service d'application, dans lequel le code d'élément d'interaction, lorsqu'il est exécuté par le dispositif intelligent, fournit le service d'application sur le dispositif intelligent ;
dans lequel le code d'élément d'interaction qui correspond aux informations de capacité comprend une pluralité de codes d'éléments d'interaction, la pluralité de codes d'éléments d'interaction, lorsqu'elle est exécutée par le dispositif intelligent, fournit le service d'application sur le dispositif intelligent, et dans lequel le procédé comprend en outre la sélection d'une pluralité de types de code d'élément d'interaction permettant de constituer le service d'application, chaque type de code d'élément d'interaction correspondant à une capacité d'entrée/sortie différente du dispositif intelligent ;
dans lequel la demande de fourniture de service transporte en outre un identifiant d'utilisateur, ou la demande de fourniture de service transporte en outre une caractéristique d'utilisateur ;
lorsque la caractéristique d'utilisateur est transportée, le procédé comprend en outre :
la détermination d'un identifiant d'utilisateur correspondant à la caractéristique d'utilisateur transportée ; et
le renvoi, au dispositif intelligent, d'un code d'élément d'interaction qui correspond aux informations de capacité et provient d'un service d'application comprend plus précisément :
la détermination d'un service d'application correspondant à l'identifiant d'utilisateur ; et
le renvoi, au dispositif intelligent, d'un code d'élément d'interaction qui correspond aux informations de capacité et provient du service d'application correspondant à l'identifiant d'utilisateur ;
dans lequel, lorsque l'identifiant d'utilisateur correspond à une pluralité de services d'application, un code d'élément d'interaction qui correspond aux informations de capacité et provient du service d'application est déterminé séparément pour chaque service d'application correspondant ; ou
conformément à un dernier temps d'utilisation, un code d'élément d'interaction qui correspond aux informations de capacité et provient d'un service d'application respectant une condition de temps prédéfinie est déterminé ; ou
un service d'application, pour lequel une durée s'écoulant entre un dernier temps d'utilisation du service d'application et un temps courant est inférieure à un seuil de durée prédéfini, est déterminé ; ou
conformément à un nombre total de temps d'utilisation, un code d'élément d'interaction qui correspond aux informations de capacité et provient d'un service d'application respectant une condition de temps prédéfinie est déterminé, ou un service d'application dont le temps d'utilisation total est supérieur à un seuil de temps prédéfini est déterminé ;
dans lequel, avant le renvoi, au dispositif intelligent, d'un code d'élément d'interaction qui correspond aux informations de capacité et provient d'un service d'application, le procédé comprend en outre :
l'envoi d'une demande d'exécution d'un terminal spécifié correspondant à l'identifiant d'utilisateur ; et
la réception d'un message de réponse qui indique que l'exécution est permise et qui est renvoyé par le terminal spécifié.

2. Procédé selon la revendication 1, dans lequel, avant le renvoi, au dispositif intelligent, d'un code d'élément d'interaction qui correspond aux informations de capacité et provient du service d'application correspondant à l'identifiant d'utilisateur, le procédé comprend en outre :
la détermination d'un contenu de service qui correspond à l'identifiant d'utilisateur et est compris dans le service d'application correspondant à l'identifiant d'utilisateur ; et
le renvoi, au dispositif intelligent, d'un code d'élément d'interaction qui correspond aux informations de capacité et provient du service d'application correspondant à l'identifiant d'utilisateur comprend plus précisément :
le renvoi, au dispositif intelligent, d'un code d'élément d'interaction qui comprend le contenu de service, correspond aux informations de capacité et provient du service d'application correspondant à l'identifiant d'utilisateur.

3. Procédé selon la revendication 2, dans lequel le contenu de service correspondant à l'identifiant d'utilisateur est déterminé conformément à une situation d'utilisation historique, concernant le service d'application, d'un utilisateur correspondant à l'identifiant d'utilisateur ; et/ou
le contenu de service correspondant à l'identifiant d'utilisateur est personnalisé par l'utilisateur correspondant à l'identifiant d'utilisateur.

4. Procédé selon l'une quelconque des revendications 1 à 3, comprenant en outre :
lorsque le message de réponse qui indique que l'exécution est permise et qui est renvoyé par le terminal spécifié n'est pas reçu, l'annulation du renvoi, au dispositif intelligent, d'un code d'élément d'interaction qui correspond aux informations de capacité et provient d'un service d'application.

5. Extrémité de service de gestion, comprenant :
une première unité d'interaction (701), configurée pour : recevoir une demande de fourniture de service envoyée par un dispositif intelligent, dans laquelle la demande de fourniture de service transporte des informations de dispositif du dispositif intelligent ; et renvoyer un code d'élément d'interaction au dispositif intelligent, de manière à ce que le dispositif intelligent fournisse un service d'application en exécutant le code d'élément d'interaction ; et
une deuxième unité d'interaction (702), configurée pour : envoyer les informations de dispositif du dispositif intelligent à une extrémité de service d'application ; et
recevoir un code d'élément d'interaction qui correspond aux informations de capacité, provient du service d'application, et est renvoyé par l'extrémité de service d'application après que les informations de capacité du dispositif intelligent ont été déterminées conformément aux informations de dispositif ;
dans laquelle la première unité d'interaction est configurée pour renvoyer une pluralité de codes d'éléments d'interaction au dispositif intelligent, la pluralité de codes d'éléments d'interaction, lorsqu'elle est exécutée par le dispositif intelligent,
fournissent le service d'application ; et dans laquelle la première unité d'interaction est configurée pour sélectionner une pluralité de types de code d'élément d'interaction permettant de constituer le service d'application, chaque type de code d'élément d'interaction correspondant à une capacité d'entrée/sortie différente du dispositif intelligent ;
dans laquelle la demande de fourniture de service envoyée par le dispositif intelligent transporte en outre un identifiant d'utilisateur, ou la demande de fourniture de service transporte en outre une caractéristique d'utilisateur ; et
l'extrémité de service de gestion comprend en outre :
une unité de détermination d'identifiant (703), configurée pour déterminer, lorsque la demande de fourniture de service transporte la caractéristique d'utilisateur, un identifiant d'utilisateur correspondant à la caractéristique d'utilisateur transportée ; et
une unité de détermination de service (704), configurée pour déterminer un service d'application correspondant à l'identifiant d'utilisateur,
dans laquelle la deuxième unité d'interaction est configurée spécifiquement pour envoyer les informations de dispositif du dispositif intelligent à l'extrémité de service d'application correspondant au service d'application, et recevoir un code d'élément d'interaction qui provient du service d'application correspondant à l'identifiant d'utilisateur et est renvoyé par l'extrémité de service d'application ;
dans laquelle, lorsque l'identifiant d'utilisateur correspond à une pluralité de services d'application, l'extrémité de service de gestion est configurée pour déterminer un code d'élément d'interaction qui correspond aux informations de capacité et provient du service d'application séparément pour chaque service d'application correspondant ; ou
pour déterminer, conformément à un dernier temps d'utilisation, un code d'élément d'interaction qui correspond aux informations de capacité et provient d'un service d'application respectant une condition de temps prédéfinie ; ou
pour déterminer un service d'application, pour lequel une durée s'écoulant entre un dernier temps d'utilisation du service d'application et un temps courant est inférieure à un seuil de durée prédéfini ; ou
pour déterminer, conformément à un nombre total de temps d'utilisation, un code d'élément d'interaction qui correspond aux informations de capacité et provient d'un service d'application respectant une condition de temps prédéfinie, ou pour déterminer un service d'application dont le temps d'utilisation total est supérieur à un seuil de temps prédéfini ;
dans laquelle l'extrémité de service de gestion est en outre configurée pour, avant le renvoi, au dispositif intelligent, d'un code d'élément d'interaction qui correspond aux informations de capacité et provient d'un service d'application, envoyer une demande d'exécution d'un terminal spécifié correspondant à l'identifiant d'utilisateur ; et
recevoir un message de réponse qui indique que l'exécution est permise et qui est renvoyé par le terminal spécifié.

6. Extrémité de service de gestion selon la revendication 5, dans laquelle l'extrémité de service de gestion est en outre configurée pour, avant le renvoi, au dispositif intelligent, d'un code d'élément d'interaction qui correspond aux informations de capacité et provient du service d'application correspondant à l'identifiant d'utilisateur :
déterminer un contenu de service qui correspond à l'identifiant d'utilisateur et est compris dans le service d'application correspondant à l'identifiant d'utilisateur ; et
dans laquelle le renvoi, au dispositif intelligent, d'un code d'élément d'interaction qui correspond aux informations de capacité et provient du service d'application correspondant à l'identifiant d'utilisateur comprend plus précisément :
le renvoi, au dispositif intelligent, d'un code d'élément d'interaction qui comprend le contenu de service, correspond aux informations de capacité, et provient du service d'application correspondant à l'identifiant d'utilisateur.

7. Extrémité de service de gestion selon la revendication 6, dans laquelle l'extrémité de service de gestion est en outre configurée pour déterminer le contenu de service correspondant à l'identifiant d'utilisateur conformément à une situation d'utilisation historique, concernant le service d'application, d'un utilisateur correspondant à l'identifiant d'utilisateur ; et/ou
pour déterminer un contenu de service correspondant à l'identifiant d'utilisateur personnalisé par l'utilisateur correspondant à l'identifiant d'utilisateur.

8. Extrémité de service de gestion selon l'une quelconque des revendications 5 à 7, dans laquelle :
lorsque le message de réponse qui indique que l'exécution est permise et qui est renvoyé par le terminal spécifié n'est pas reçu, l'extrémité de service de gestion est en outre configurée pour annuler le renvoi, au dispositif intelligent, d'un code d'élément d'interaction qui correspond aux informations de capacité et provient d'un service d'application.
